# EUROPEAN PATENT APPLICATION

(11) **EP 2 388 550 A1**
(43) Date of publication of application: **23.11.2011**
(21) Application number: 11075079.1
(22) Date of filing: 04.05.2011
(51) Int. Cl.: G01B 7/02

(54) **Method and system for inductive sensing of blades in a turbine engine**

(30) Priority: 18.05.2010 GB 1008282
(71) Applicant: WESTON AEROSPACE LIMITED, Farnborough, Hants GU14 7PW (GB)
(72) Inventor: Allen, Leslie William, Farnborough Hampshire, GU14 6LD (GB); Palmer, Anthony, Farnborough Hampshire, GU14 7PW (GB); Clifton-Welker, Matthew, Farnborough Hampshire, GU14 7PW (GB)
(74) Representative: Ponder, William Anthony John

(57) **Abstract**

A method is provided for determining timing points indicative of the passage of a blade in a turbine engine. The method comprises the steps of: providing a first sensing coil proximate to a path of the blade, providing a second sensing coil proximate to the path of the blade, the second sensing coil spaced from the first sensing coil in a direction parallel to the path of the blade, and comparing a signal generated in the first sensing coil with a signal generated in the second sensing coil to derive a timing point indicative of the passage of the blade.

## Description

### Field of the Invention

The invention relates to a method and system for sensing turbine and compressor blades in a turbine engine.

### Background to the invention

Eddy current sensors are often used within turbine engines to detect rotating turbine and compressor blades. Typically, signals from the sensor are used to generate a timing signal. This timing signal is then used to accurately measure the position of each blade relative to the other blades in the turbine engine and the turbine shaft in near real time. From these timing signals, various measurements, such as blade position, flutter, vibration, untwist, etc may be derived.

Eddy current sensors detect the presence of conductive materials within their sensing field of view. Many variables affect the quality of the measurements obtained from eddy current sensors. For example, the sensor output scaling is nonlinear and changes with varying target displacement. This means that there may be a great variation in signal level between individual blades, due to their varying tip heights. This is especially true at small displacements because of the nonlinear characteristics of the signal with respect to displacement. The signal amplitude increases roughly exponentially as displacement is reduced.

Because of the blade tip height variation, it is therefore necessary to treat each blade signal separately when processing it to find a repeatable timing point. This is usually done by finding some form of derived midlevel or zero crossing point in the signal arising from each blade. However, the change in an eddy current sensor output due to the presence of a sensed target is generally unipolar in nature, and so is not zero referenced. Accordingly, determination of a midpoint in a signal for use as a blade timing reference is relatively complex. This complexity means that the associated signal processing electronics is both complex and power hungry.

There are a number of methods that have been developed in order to determine a fixed reference point in signals of this type from eddy current sensors. One method currently used, involves separately determining the positive and negative waveform peaks, either in electronic hardware or software, and then dividing the sum of these values by two to obtain the midpoint reference. The drawback of this method is that it requires either a very fast and consequently power hungry, analogue to digital converter and software processor, or fast peak detectors using capacitive storage methods. Peak detectors are also very power hungry and wasteful, owing to the necessity to fast charge and then fast reset the charge-hold capacitors at each blade passing.

It is also possible, using hardware and/or software, to measure the angular rate of change in the waveforms using differentiation or signal averaging. As stated, generally the complexity and processing speed required increases the power requirements of the associated electronics significantly. Both methods also generally add delays in the processing due to the need to use data over an extended window of time. This typically requires a look ahead buffer or other measurement phase shift, to provide a "walking-window" of data, with calculations centred on the middle of the window.

It is an object of the invention to provide a less complex means of extracting timing signals from an inductive sensor for measuring the passage of blades in a turbine engine that has reduced power requirements when compared to prior systems, and reduced sensitivity to environmental factors and build tolerances.

### Summary of the invention

The present invention is defined in the appended independent claims, to which reference should be made. Preferred features are set out in the dependent claims.

The present invention uses a pair of coils arranged parallel to the path of the blades, such that in use each blade passes the first coil and then subsequently passes the second coil. The use of a pair of sensing coils provides for inherent accuracy. The amplitude of signals generated in the coils does not significantly affect the determination of the timing signals, because the timing signals are derived from a comparison of the signals from each coil. Only noise and gross amplitude variations need to be catered for. Because of this, the electronic hardware and/or processor and software complexity requirements are reduced, and the associated power requirements are reduced, compared to the prior art. Furthermore, the system and method of the present invention results in improved noise rejection, reduced sensitivity to build tolerances, reduced sensitivity to temperature variation effects and reduced sensitivity to amplitude variation effects.

### Brief Description Of The Drawings

Examples of the present invention will now be described in details with reference to the accompanying drawings, in which:
Figure 1 is a schematic diagram illustrating a sensor in accordance with the present invention;
Figure 2a illustrates typical signals from both sensor coils;
Figure 2b shows the signals of Figure 2a after half wave amplitude modulation envelope detection, amplification and filtering, and are overlaid to show their phase relationship;
Figure 3a is a side view of the coil arrangement in a sensor in accordance with the present invention;
Figure 3b is an end view of Figure 2a;
Figure 4 shows a sensor processing configuration for use in a sensor in accordance with the present invention; and
Figure 5 shows timing signals generated by the processing configuration illustrated in Figure 4.

### Detailed Description

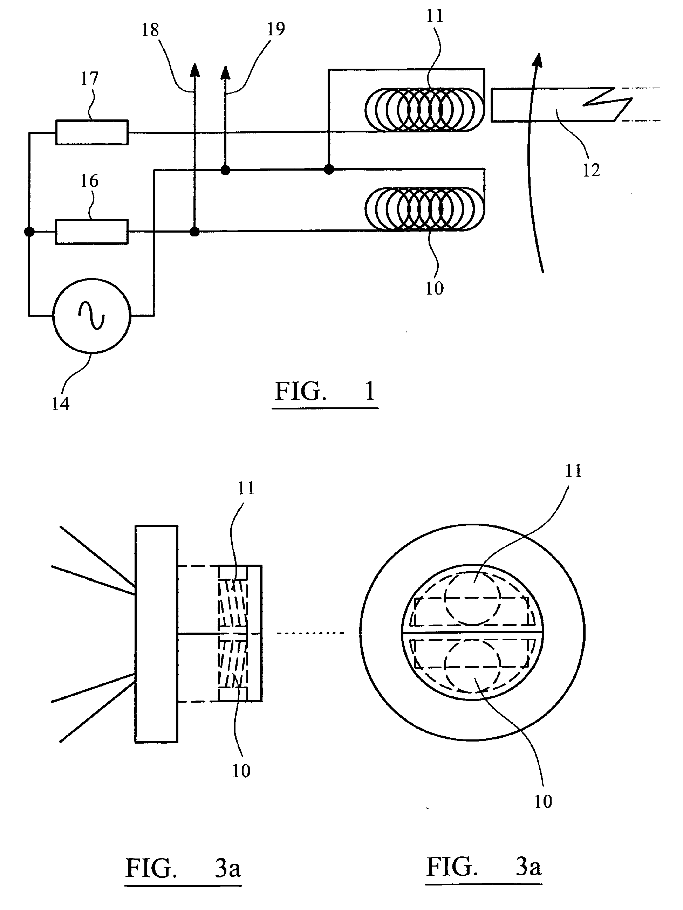

Figure 1 is a schematic diagram illustrating a sensor in accordance with the invention. The sensor comprises two sensor coils 10, 11 arranged side by side parallel to the path of blades 12, fixed to a rotating shaft in a turbine engine. The blades each pass close to the first sensor coil 10 and subsequently pass the second sensor coil 11. Both coils are driven by a fixed frequency oscillator 14 so that an oscillating current passes through each coil.

Each sensor coil therefore produces an oscillating magnetic field through which the tip of each blade passes as it rotates. The oscillating magnetic fields set up eddy currents in the blade tips (which are formed of electrically conductive material). The eddy currents generate their own magnetic field which modify the impedance and inductance of the sensor coils, and hence the current in the sensor coils.

The modification of the current signal in the sensor coils occurs with each passing of a blade tip and so is essentially a periodic modulation of the oscillator signal. The two coils give rise to similar modulation but with a phase difference between them, owing to the time delay between the passing of a blade 12 past the first sensor coil 10 and the passing of that blade past the second sensor coil 11.

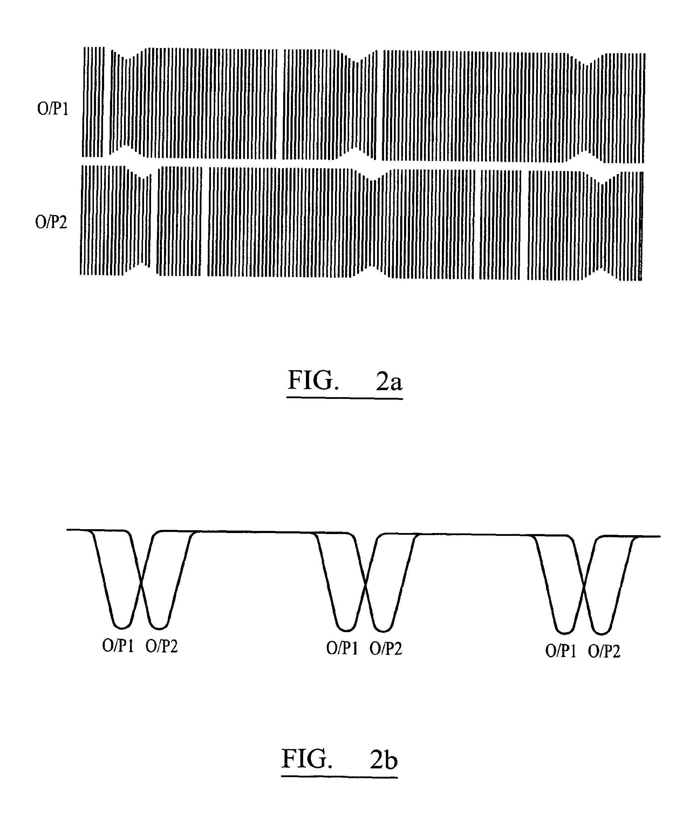

Figure 2a illustrates the signals obtained at the outputs 18 and 19.The signal at the first output 18 is shown at the top, and is an amplitude modulated version of the signal from the oscillator 14. The signal at the second out put 19 is shown below, and is similar to the signal at the first output 18, but with a phase shift in the modulating envelope.

Figure 2b shows the signals from the first and second outputs 18, 19, after half-wave amplitude modulation envelope detection, amplification and filtering, and are overlaid to show their phase relationship. A timing signal can be generated from the points at which the amplitudes of the two demodulated signal are equal.

In Figure 1, the sensor coils 10, 11 are arranged in bridge formation with two resistors 16, 17 of the same value. The bridge circuit is driven from a fixed frequency oscillator 14 via the junction of the two resistors, with respect to the junction of the two coils 10, 11. The symmetrical nature of the bridge configuration provides advantages. With a single oscillator, any remnant excitation carrier present in the two processed signals is synchronous and approximately equal. This means that any carrier noise present in the signals presented to a comparator comparing the two signals effectively cancels out, reducing timing jitter.

The excitation oscillator type is unimportant, but preferably produces a stable amplitude sine wave of suitable frequency with low phase and harmonic distortion (allowable levels of distortion would depend on final timing accuracy required).

The excitation frequency required and the characteristics of the inductors and resistors utilised will be dependent on the frequency and bandwidth requirements for the sensor design.

The characteristics of the two coils 10, 11 do not need to be especially matched. Any drifts in their characteristics would be in the same direction, so would essentially cancel each other out during a comparison of the two sensor coil signals.

The characteristics of the two resistors 16, 17 used for the sensor bridge are also not of great importance as long as their temperature and ageing drifts are similar in direction and magnitude. However, even relatively high accuracy parts have become low cost in recent times. Standard' 1% 100ppm/°C or 50ppm/°C thick film or thin film parts would be more than accurate and stable enough.

The two resistors 16, 17 in the sensor bridge should ideally be of equal value and chosen to roughly match the inductor impedances at the nominal drive frequency used. If desired, one of the resistors could be small outline transistor (SOT) or a potentiometer trimmer, providing a means to obtain a fine signal balance. This would further reduce the effects of any coil or resistor mismatch in the bridge at build time.

The excitation oscillator amplitude should be large in order to obtain a high signal to noise ratio and large modulation amplitude but, at the same time, small enough to avoid approaching saturation of the inductors or clipping in the subsequent electronic processing. In this example, two amplitude modulation (AM) envelope detectors are used to demodulate the target signals from the carriers, so the peak carrier amplitudes at each coil must be greater than the demodulator diode forward voltages plus the amplitude of any modulation. Allowance for diode forward voltage changes with temperature must also be included, to ensure enough headroom is available under all conditions.

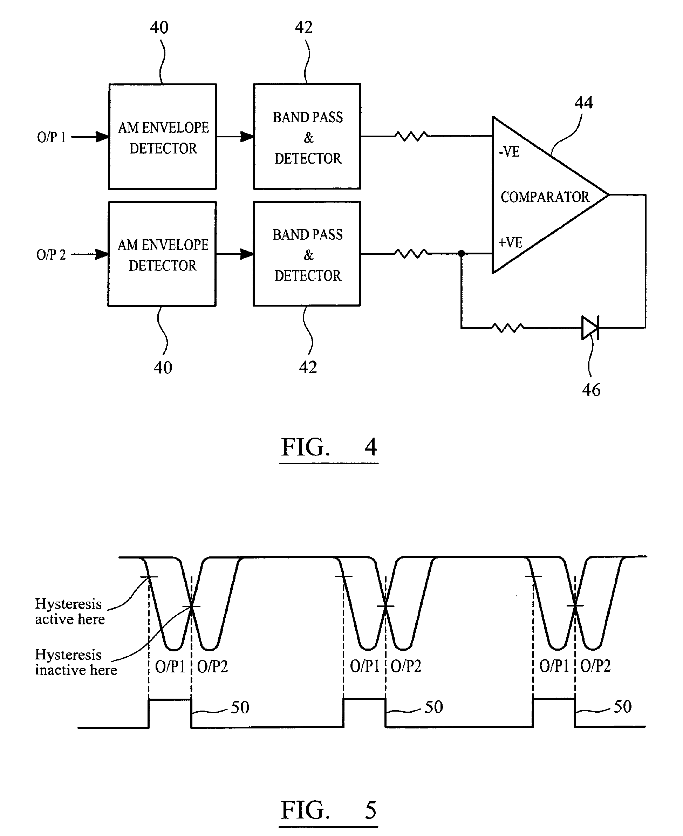

Following demodulation, the two signals are amplified and further filtering is applied if desired. The signals are then presented to the inputs of an analogue comparator, to generate timing edges at the point at which the modulation waveforms from the two coils cross over, as described in greater detail with reference to Figures 4 and 5.

The distance between the centres of the two sensor coils may need to be varied slightly from application to application, and should be chosen to suit the target blade thickness. For best accuracy the coil-coil distance should be chosen to cause the modulation signals cross near their 50% amplitude point. This is where the signal amplitudes are likely to be changing most steeply, so generating timing signals at those points will minimise the effects of any amplitude jitter/noise at the signal comparator inputs. Alignment at higher or lower levels is possible, but noise effects significantly increase as the trigger point approaches the top or bottom of the waveforms, where the rate of voltage change shallows.

Because the coils are of closely similar build, mounted in close proximity, driven by the same excitation signal and sensing the same target, any drifts or changes in their physical and electrical characteristics will also be similar. This will also largely hold true for external influences. Any noise pick-up in the coils will be effectively minimised by common-mode cancellation when the two signals are compared in the later processing.

Figures 3a and 3b show a possible configuration of the sensor coils 10, 11. The two sensor coils 10, 11 may be round, 'D' shaped or rectangular as required to optimise the signal characteristics for the blade width, sensor spacing etc. and various shapes are shown in dashed lines. The overall shape of the housing 30 is largely application dependent and not critical to the principle of operation. The housing 30 supports the coils in a stable, fixed position and holds the coils at the same height and parallel with one another. The distance of the coils from the blade tip is chosen for a particular application.

The sensor is typically positioned in a turbine casing such that the junction between the two coils aligns approximately with the blades' tip angle, i.e. aligned with the tangent of the blade centre chord as it passes. However, because of the dual coil configuration, even quite large rotational errors in the coil's alignment relative to the blade tips would have negligible effect on the crossing point of the two output signals. The coils axes, i.e. the axes around which the coils are wound, are aligned with the radial axis of the blades being sensed and at right angles to the turbine shaft. In other words, the axes point towards the turbine shaft.

The coils are wound in the same direction, with similar physical and electrical characteristics. The cross-sectional shape of each coil is typically oval or rectangular but can be chosen to suit the application. For thin blade sections the coils can be oval or rectangular to maximize the blade tip area influencing the coils. For thicker blades, round section coils may be adequate. Ideally, the coils sensing face width is about the same as the aligning part of the blade tip's width.

In typical configurations where the sensors may be employed on several different turbines, with similar blade thicknesses but different twist angles, a round sensor body can be beneficial. Using a rear clamp type mounting or a lockable flange, the sensor can be rotated to match the blade angle and then be locked in place.

The sensor housing may also contain part of the electronic processing circuitry such as the excitation oscillator and AM demodulator sections. This enables much longer sensor-to-processing electronics connecting cables to be employed and, also reduces RF emissions from the cables, because of the lower signal bandwidth.

One processing method for generating a timing signal for the turbine blades involves comparing the two demodulated signals and generating a timing edge as their amplitude levels cross. Because any drifts or other changes will essentially occur equally in each coil output, any errors are effectively tracked by the compared signals and hence have little effect on the timing of the crossing point. Any carrier feed-through noise remnants will be effectively nulled because the two signals will be of the same frequency and phase so will track each other at the comparator inputs.

Figure 4 shows a simplified part-block diagram of a possible sensor processing configuration. The signals from each of the outputs 18 and 19 are first demodulating by half-wave envelope detector electronics 40. The demodulated signals are then band pass filtered and amplified by suitable electronics 42. Amplification and filtering remove any remnants of the sensor excitation carrier. The signals are then passed to a comparator 44. This is arranged with single polarity positive feedback hysteresis. In the configuration shown in Figure 4, this causes the hysteresis to only be applied during negative comparator output swings. The hysteresis is blocked by the diode 46 during positive output swings so does not affect the switching threshold. This allows a voltage margin to inhibit triggering of the comparator when both signals are near the resting level. The comparator output can only swing positive when input 1, derived from the first sensor coil 10, falls below input 2 derived from the second sensor coil 11, level minus the hysteresis. Once the comparator output has swung positive, the hysteresis is effectively removed. As a result the comparator output will switch negative when signals 1 and 2 cross, in the middle of the blade pass. This point is at the required Tip Timing point in the blade pass. This tip timing edge may then be used to trigger a pulse stretcher which will in turn generate a buffered tip timing output pulse of the required length and polarity.

Figure 5 shows a typical waveform sequence, with the hysteresis points shown. The overlaid demodulated signals are shown above the output timing signal. A tip timing edge 50 is generated each time the amplitude of the two signals cross with output 1 rising and output 2 falling.

The signals from the coils could be demodulated in an inverted sense to that shown in Figure 5. In that case, the hysteresis would also be reversed, by reversing the blocking diode.

It should be appreciated that, although the present invention has been described with reference to an active eddy current sensor, it may be applicable to other types of inductive sensor in a turbine engine, such as passive eddy current sensors.

This present invention allows for simplified but improved tip timing sensor signal processing electronics. The invention greatly reduces the power requirements as compared with the prior art by removing the need for high speed signal peak-detectors. The present invention also reduces the effects of random noise in the analogue signals and improves overall EMC performance.

## Claims

1. A method for determining timing points indicative of the passage of a blade in a turbine engine, comprising the steps of:
providing a first sensing coil proximate to a path of the blade;
providing a second sensing coil proximate to the path of the blade, the second sensing coil spaced from the first sensing coil in a direction parallel to the path of the blade; and
comparing a signal generated in the first sensing coil with a signal generated in the second sensing coil to derive a timing point indicative of the passage of the blade.

2. A method according to claim 1, wherein the step of comparing comprises subtracting a signal derived from the first sensing coil from a signal derived from the second sensing coil.

3. A method according to claim 1 or 2, further comprising the step of applying an oscillating current through the first and second sensing coils.

4. A method according to claim 3, further comprising the step of demodulating a signal from the first sensing coil and a signal from the second sensing coil to extract first and second modulation signals.

5. A method according to claim 4, wherein the step of comparing comprises comparing the first demodulated signal with the second demodulated signal to derive a timing point indicative of the passage of the blade.

6. A method according to any preceding claim, wherein the step of comparing comprises determining when the value of the signal from the first sensing coil is equal to the value of the signal from the second sensing coil to derive a timing point indicative of the passage of the blade.

7. A method according to any of the preceding claims, wherein the second sensing coil is spaced from the first sensing coil so as to minimise the effects of noise on the derived timing point.

8. An inductive sensor in a turbine engine for detecting the passage of blades in the turbine engine, comprising:
a first sensor coil;
a second sensor coil spaced from the first sensing coil in a direction parallel to a path of the blades; and
signal processing electronics configured to provide a timing point by comparing a signal output from the first sensor coil with a signal output from the second sensor coil.

9. An inductive sensor according to claim 8, wherein the processing electronics comprise a comparator with single polarity positive feedback hysteresis.

10. An inductive sensor according to claim 8 or 9, further comprising an oscillator coupled to the first and second coils and configured to apply an oscillating voltage across the first and second coils.

11. An inductive sensor according to claim 8, 9 or 10, wherein the first and second sensing coils are arranged in a bridge configuration.

12. An inductive sensor according to any one of claims 8 to 11, wherein the signal processing electronics comprise demodulator electronics configured to demodulate the signals from the first and second coils to provide first and second demodulated signals, and wherein the signal processing electronics is configured to compare the first and second demodulated signals.

13. An inductive sensor according to claim 12, wherein the signal processing electronics is configured to provide a timing point when the value of the first demodulated signal is equal to the value of the second demodulated signal.

14. An inductive sensor according to any one of claims 8 to 13, wherein the spacing between the first sensor coil and the second sensor coil in the direction parallel to the path of the blades is approximately equal to the thickness of the blades.

15. An inductive sensor according to any one of claims 8 to 14, wherein the first and second coils are aligned with one another such that a junction between the first and second coils is aligned with a tangent of the centre chord of each blade as it passes the coils.
